# EUROPEAN PATENT SPECIFICATION

(11) **EP 2 520 404 B1**
(45) Date of publication and mention of the grant of the patent: **21.02.2018**
(21) Application number: 12166892.5
(22) Date of filing: 04.05.2012
(51) Int. Cl.: B29C 33/38, B29C 33/42, B29C 33/10, B29C 51/36, B29C 51/40, B23P 15/24

(54) **Procedure for the construction of thermoforming moulds**
Verfahren zur Herstellung von Formwerkzeugen für Formgebung durch Warmformen
Procédure de construction de moules de thermoformage

(30) Priority: 06.05.2011 IT VR20110094
(43) Date of publication of application: 07.11.2012
(73) Proprietor: ML Engraving Srl, 24020 Onore (BG) (IT)
(72) Inventor: Lodetti, Andrea, 24020 ONORE (BG) (IT); Giudici, Paolo, 24020 ONORE (BG) (IT); Balduzzi, Silvano, 24020 ONORE (BG) (IT)
(74) Representative: Crippa, Paolo Ernesto

(56) References cited:
- EP-A1- 2 098 349
- DE-A1-102005 037 308
- US-A1- 2008 191 390
- US-B1- 6 660 216

## Description

### TECHNICAL FIELD

This invention relates to a procedure for the construction of moulds designed for the thermoforming of plastic materials.

In particular the present invention refers to a procedure which uses thermoforming moulds manufactured with a technology which is new to this sector: laser technology.

The procedure according to the present invention proposes plastic injection moulds which have a system of air vent channels which follow the geometry of the texture and which in this specific example follow pyramidal shapes as far as their tips and connect the pyramids to each other.

These channels comprise a grid inside the texture connected to side gutter channels which permit the correct escape of air from the mould.

These channels are so small that they do not deform the plastic material which will line the mould during moulding but at the same time are large enough to permit the air to escape from the mould.

The present invention can be applied in the mechanical engineering industry for the moulding of plastic materials and in particular applies to the sector for moulds used for the thermoforming primarily, but not exclusively, of plastic materials.

### BACKGROUND ART

It is well known that the thermoforming moulding sector produces moulded parts starting out from sheets of plastic material of various thickness which are placed in moulds and then heated so that they adhere to the walls of the mould and thereby take on the shape required.

In general the industrial production processes of moulding, die-casting, deep drawing, foaming and sintering require moulds to shape the parts or the materials being processed. These moulds comprise dies designed specifically as forming tools.

Mould characteristics and technology vary according to the type of process.

The main components of moulds are usually two or more half-moulds or dies containing the shape of the part to be produced.

Production moulds are usually made from hardened and tempered steel or tempered steel (the result of heat treatment processes used to improve the characteristics of metals); for special processes aluminium or wooden moulds may be used.

Industrial moulds can be used for the production of single parts, small series of multiple parts or for hundreds of thousands of parts. Medium to large size moulds are usually manufactured by milling on machine tools. Particularly small moulds with complex finishes or those requiring a high degree of precision (to a few hundredths of a millimetre) are produced using electrical discharge machining, photoengraving and, the most recent development, laser technology.

The process for thermoforming plastics consists of processing sheets of heated plastic which are placed on top of the mould which is frequently a single, male die.

A pneumatic vacuum is then created under the mould and through special holes in the mould assists adherence and draws the material onto the mould where it solidifies.

These types of mould are usually economic given that they do not require resistances or temperatures and can be made from wood, resin or soft metals. They can be used to manufacture parts of a considerable size (up to several metres) using moulds of a suitable size.

The known method of thermoforming has evident limits when it has to be used for moulding complex geometries and three-dimensional textures.

The known procedure for moulding by thermoforming consists of two main steps:
1. Creation of a vacuum and the application of a sheet of plastic material over the mould to prevent the passage of air.
2. Evacuation of the air contained inside the mould by sucking out the air through micro-holes (attached to special suction devices) which are dimensioned and positioned so that they do not leave marks on the finished product.

The main limitation of known thermoforming processes is the difficulty of discharging the air from the mould. This is particularly the case when the mould has a complex texture because not all the air is able to escape from the mould and pockets of air are created which prevent the creation of the texture.

The search for a solution to overcome the problem of evaluating all the air from the mould has lead to the following solutions. The applicant believes that both solutions present considerable problems:
a) Thermoforming processing with plastic sheets which have already been textured by embossing. In this case process times are increased because the sheet has to be separately textured before it is placed in the thermoforming mould in a subsequent steep. Furthermore, the main problem is the deformation of the texture which takes place when a flat sheet is placed over and lines a three-dimensional mould. The texture in this case depends very much on the shape of the mould.
b) Porous nickel moulds. This material is chosen for the construction of moulds because its characteristics enable the evacuation of the air from the mould. In this case the costs of making the mould itself are very high and the time needed to produce the mould are very long.
   Some companies have proposed another solution as follows.
c) The creation of holes on all the apices of the pyramids forming the texture. However, these holes enabling the air to escape have to be drilled through the entire thickness of the mould. This particular solution is too expensive in therms of both times and costs in that it requires the use of a very costly machine tool with the capability of drilling through a steel mould.

Document DE 10 2005 037308 A1 discloses a method for forming a deaerating device for an injection mold, involving (a) forming deaeration channels of defined length, cross-sectional shape and cross-sectional area in the separating plane region of the mold and (b) connecting the internal region of the mold with the external region or a deaeration channel.

Document US-A-6660216 discloses processes and apparatus for below molding which include a mold surfaces having micrograined patterns to improve venting and surface finish. The micrograined patterns are preferably in the form of projections that define between them a network of interconnected channels. The projections are of a sufficient height that they engage the outer surface of a fully-expended parison and form venting passages with the parison surface to permit trapped air to escape and migrate through vent holes which communicate with the channels. The dimensions and shape of the projections are selected to provide for the formation of venting passages while preventing the formation of patterns in the surface of the molded product.

**Document** EP 2 098 349 A **shows a solution for producing surface texture.**

### DESCRIPTION OF THE INVENTION

The present invention concerns a procedure for the construction of moulds designed for the thermoforming of plastic materials which makes it possible to eliminate or at least reduce the drawbacks described above.

This invention also relates to a procedure for the construction of moulds designed for the thermoforming of plastic materials which is simple to implement.

This purpose is achieved by a procedure for the construction of moulds for the thermoforming of plastic materials according to claim 1.

The dependent claims of the solution in question describe advantageous embodiments of the invention.

The principal advantages of this solution, in addition to all those which derive from its simple, easy to manufacture design, primarily concern that fact that the procedure for making thermoforming moulds according to the invention employs laser technology - a technology which is new to this sector.

The procedure according to the present invention proposes plastic injection moulds which have a system of air vent channels which follow the geometry of the texture and which in this specific example follow pyramidal shapes as far as their tips and connect the pyramids to each other.

These channels comprise a grid inside the texture connected to side gutter channels which permit the correct escape of air from the mould.

These channels are so small that they do not deform the plastic material which will line the mould during moulding but at the same time are large enough to permit the air to escape from the mould.

### DESCRIPTION OF THE DRAWINGS

Further features and advantages of the invention will become apparent from the description of an embodiment which follows with reference to the annexed drawings, given purely by way of a non-limiting example, in which:

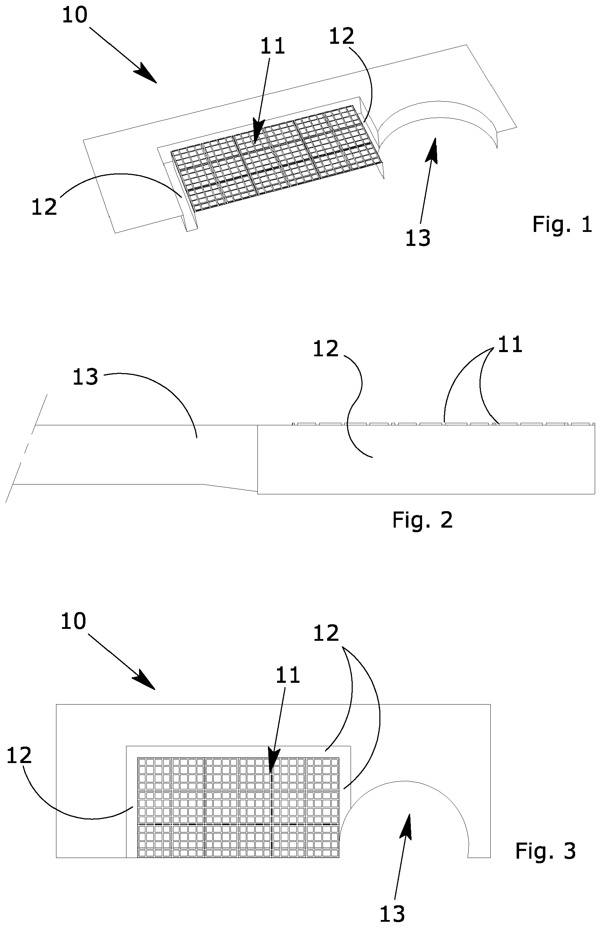

- Figure 1 shows a diagram of one possible configuration of the air vent channels for thermoforming;
- Figure 2 shows a cross-section of an aspiration channel connected to the master aspiration channel;
- Figure 3 shows a plan view of a possible configuration of the aspiration channels, the master channels and the master aspiration hole according to the invention as a whole.

### DESCRIPTION OF ONE EMBODIMENT OF THE INVENTION

The annexed figures illustrate a procedure for the construction of moulds designed for the thermoforming of plastic material which substantially involves the use of thermoforming moulds indicated in their entirety by the number 10 where the inside part of these moulds has been shaped employing laser technology.

As indicated above the procedure according to the present invention involves the use of plastic injection moulds 10 with a system of air vent channels 11, formed by laser cutting, which follow the geometry of the texture of the surface of the moulded article.

In the case where this texture has, for example, a pyramidal shape, the vent channels 11 specific to this application will follow the pyramid shapes to their tips and then connect to the other pyramids.

These channels comprise a grid or network inside the texture and are connected to side gutter channels 12 which permit the efficient escape of air from the mould.

These channels 11 are so small that they do not deform the plastic material which will line the mould during moulding but at the same time are large enough to permit the air to escape from the mould.

The side gutter channels 12 in turn are connected to a master vent hole 13 through which the air escapes to the outside of the mould.

This solution can be managed directly in the workshop thereby avoiding the need for the traditional operations to create the holes in the mould or to construct the mould with a costly material. The solution simply uses a system of side gutter channels 12 combined with a series of air circulating channels 11.

This solution is made possible by Design Rendering Engineering (D.R.E.®) which makes it possible to design the system of channels on the geometric texture chosen by the customer.

The procedure according to the present invention enables the achievement of significant advantages including:
a) a high quality texture cut directly onto the mould;
b) absence of the traditional problems of stretching and deformation found with the embossing-thermoforming system;
c) the possibility of customising thermoformed items by operating directly on the mould; decorations chosen by the customer can be positioned precisely on the mould;
d) the possibility of reducing production times and costs;
e) the possibility of creating any type of tree-dimensional texture on surfaces with a complex geometry thanks to the D.R.E.® system which makes it possible to redesign the channel system to match any texture.

The invention is described above with reference to a preferred embodiment.

## Claims

1. A procedure for the construction of moulds designed for the thermoforming of plastic materials, wherein the procedure comprises the following steps:
- providing thermoforming moulds (10),
- cutting directly onto the mould a high quality texture with laser technology;
- shaping the moulds, that is to say notch internally the moulds by means of laser technology in order to create a plurality of air vent microchannels (11); where said microchannels (11) are made by laser incision, following the geometry of the texture of the surface of the moulded article to be moulded, and where
- said microchannels (11) comprise a grid or network inside the texture ;
- connecting said channels (11) to a plurality of side gutter channels (12) for flow of the air into said gutter channels (12);
- connecting said gutter channels (12) to a master vent hole (13), from which the air escapes towards the outside of the mould.

2. The procedure according to claim 1, **characterised in that** said texture is created with pyramidal type shapes, and the specific vent microchannels (11) follow these pyramidal type shapes as far as their tip and -connect the pyramids to each other.

3. The procedure according to any of the foregoing claims, **characterised in that**
- shaping said microchannels (11) to have a limited thickness as to not deform the plastic material which lines the mould, but sufficient to allow the air to escape.

## Patentansprüche

1. Verfahren für die Herstellung von Formen, die entworfen sind für das Thermoformen von Plastikmaterialien, wobei das Verfahren die folgenden Schritte umfasst:
- Bereitstellen von Formen für Thermoformen (10),
- Schneiden einer Textur von hoher Qualität mit Lasertechnologie direkt in die Form;
- Modellierung der Formen, das heißt internes Einkerben der Formen mittels Lasertechnologie, um eine Mehrzahl von Luftventilationsmikrokanälen (11) zu erzeugen;
wobei die Mikrokanäle (11) mittels Laserschnitten hergestellt werden und folgend der Geometrie der Textur der Oberfläche des gegossenen Artikels, der zu gießen ist, und wobei die Mikrokanäle (11) ein Gitter oder Netzwerk innerhalb der Textur umfassen;
Verbinden der Kanäle (11) mit einer Mehrzahl von seitlichen Abflusskanälen (12) zum Fließen von der Luft in die Abflusskanäle (12);
Verbinden der Abflusskanäle (12) mit einem Hauptventilationsloch (13), aus dem die Luft hin zu dem Äußeren der Form entweicht.

2. Verfahren nach Anspruch 1, **dadurch gekennzeichnet, dass** die Textur erzeugt wird mit Formen vom Pyramidentyp und dass die spezifischen Ventilmikrokanäle (11) diesen Formen vom Pyramidentyp so weit wie ihre Spitze folgen und die Pyramiden miteinander verbinden.

3. Verfahren nach irgendeinem der vorhergehenden Ansprüche, **gekennzeichnet durch** ein Modellieren der Mikrokanäle (11) eine begrenzte Dicke zu haben, um das Plastikmaterial nicht zu deformieren, das die Form auskleidet, aber ausreichend, um zu ermöglichen, dass die Luft entweicht.

## Revendications

1. Procédure pour la construction de moules conçus pour le thermoformage de matériaux plastiques, dans laquelle la procédure comprend les étapes suivantes :
- fourniture de moules de thermoformage (10),
- coupe directe sur le moule d'une texture haute qualité avec une technologie laser ;
- formage des moules, c'est-à-dire encochage en interne des moules au moyen de la technologie laser afin de créer une pluralité de microcanaux d'aération (11) ;
où lesdits microcanaux (11) sont réalisés par incision au laser, suivant la géométrie de la texture de la surface de l'article moulé à mouler, et
où lesdits microcanaux (11) comprennent une grille ou un filet dans la texture ;
- connexion desdits canaux (11) à une pluralité de canaux de rigole latéraux (12) pour le flux de l'air dans lesdits canaux de rigole (12) ;
- connexion desdits canaux de rigole (12) à un trou de ventilation maître (13) duquel l'air s'échappe vers le côté extérieur du moule.

2. Procédure selon la revendication 1, **caractérisée en ce que** ladite texture est créée avec des formes de type pyramidal,
et les microcanaux de ventilation spécifiques (11) suivent ces formes de type pyramidal jusqu'à leur extrémité et raccordent les pyramides l'une à l'autre.

3. Procédure selon l'une quelconque des revendications précédentes, **caractérisée par**
- le formage desdits microcanaux (11) pour avoir une épaisseur limitée afin de ne pas déformer le matériau plastique qui double le moule, mais suffisante pour permettre à l'air de s'échapper.
